# EUROPEAN PATENT APPLICATION

(11) **EP 1 154 359 A1**
(43) Date of publication of application: **14.11.2001**
(21) Application number: 00105610.0
(22) Date of filing: 16.03.2000
(51) Int. Cl.: G06F 17/60

(54) **Product management method for a supply chain**

(71) Applicant: OpenManufacturing Co., Ltd., Tokyo (JP)
(72) Inventor: The designation of the inventor has not yet been filed
(74) Representative: Glawe, Delfs, Moll & Partner

(57) **Abstract**

At the stage of product planning, an ID is assigned to each lot of products, and the date of completion and the available date for shipment are predicted. A plurality (n) of lots are separately reserved for a plurality (m) of orders, whereby the delivery date of products and the identification of phase of the product can be managed by managing the individual lots. The management of inventory and the supply chain management can be unified for saving the costs and time for the management.

## Description

### BACKGROUND OF THE INVENTION

### (a) Field of the Invention

The present invention relates to a product management method for a supply chain and, more particularly, to a product management method capable of managing a supply chain of products by using a stream line management technique.

### (b) Description of Related Art

A supply chain refers to a chain of physical distribution of commercial goods from the supply of raw materials to the delivery of final products to customers, and is a concept that covers all aspects or stages of business operations in handling the commercial goods, such as manufacture, physical distribution and sales, and that involves different categories of business including manufacture, wholesale, retail and marketing, from the uppermost stream to the lowermost stream in the flow of the goods. Conventional concept of supply chain management for commercial goods is limited within a factory, for example, and is practiced as scheduling activities such as production planning and inventory management planning in the context of production and sales management. The supply chain was managed on the basis of static control of inventory in the prior art.

Conventional practice of supply chain management will be described below for a case of reserve management of inventory in a plywood manufacturing plant as an example. The plywood products made by gluing thin layers of wood have a restriction wherein the plywood products cannot be shipped until it is left for curing in a warehouse for, for example, five days since the gluing. Accordingly, upon receipt of an order, reserve management of inventory was applied to products stocked for five days or more days for aging after the manufacture thereof, while classifying the finished plywood products into one-day-aged products, two-day-aged products, ···, four-day-aged products and five- or more-day-aged products based on the day-age of the products or the number of days elapsed since the product was finished.

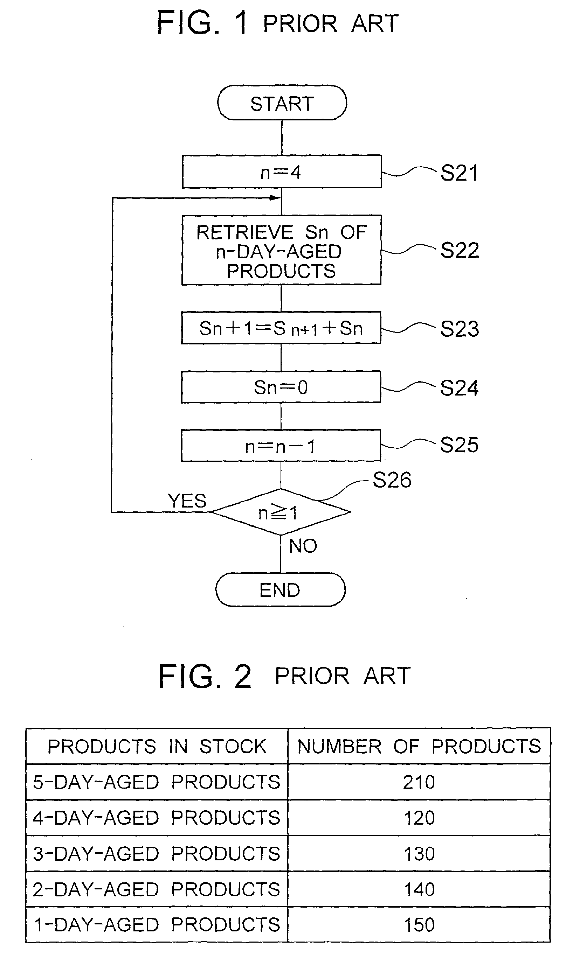

Fig. 1 is a flowchart showing a batch process of the daily inventory management. For a convenience of description of the process, it is assumed that the number of finished plywood products on each day is such that 100 sheets are produced on the first day of production, 110 sheets on the second day, 120 sheets on the third day, 130 sheets on the fourth day, 140 sheets on the fifth day, and 150 sheets on the sixth day. The subsequent description will be given for the management starting from the morning of the sixth day of production.

From the given assumption as described above, the data at the start of the daily batch process is such that there are 100 sheets of five- or more-day-aged products in stock, 110 sheets of four-day-aged products, 120 sheets of three-day-aged products and 130 sheets of two-day-aged products. The number of one-day-aged products is entered at the start of batch processing based on the production schedule for the day or, alternatively, the number of sheets actually produced in the day's operation is entered at the end thereof.

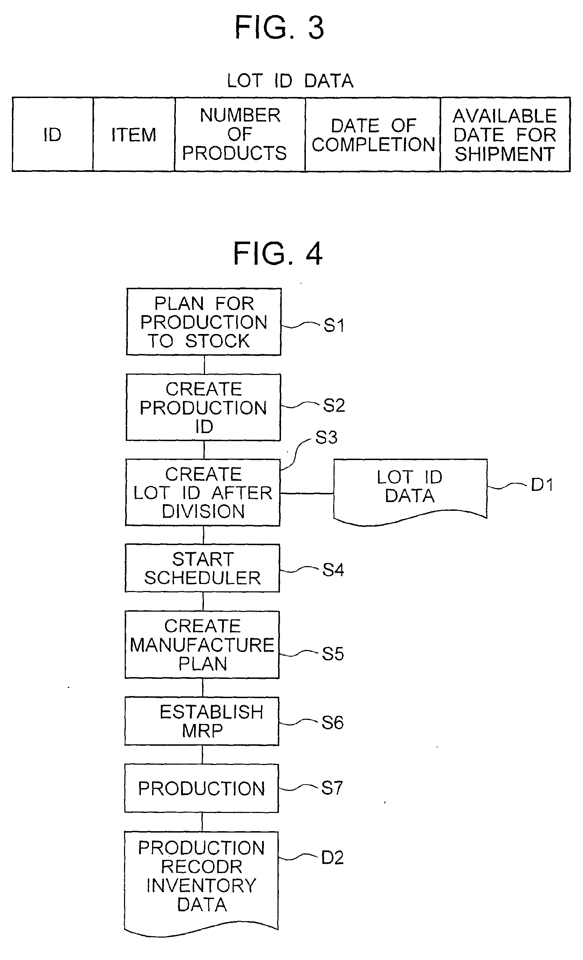

In Fig. 4, first, n=4 is entered (step S21) for the number "n" of aged days, and the number Sn (110) of n-day-aged products in stock (i.e., the four-day-aged products) for the yesterday is retrieved (step S22). The retrieved number Sn is then added to the number Sn+1 of (n+1)-day-aged products in stock, that is 100, for the yesterday and the resultant number of 210 is stored as the number Sn+1 of (n+1)-day-aged products in stock (five-day or more-day-aged products) as of today (step S23). The number Sn of n-day-aged products in stock is cleared (step S24), namely the number of four-day-aged products in stock is reset to 0. Then value of n is decrement by one to obtain three (step S25). Now, because n≧1 (step S26), the process returns to step S22 wherein the number of n-day-aged products in stock, 120, for the yesterday is retrieved and added to the number of (n+1)-day-aged products in stock for the yesterday, with the result that the resultant number Sn+1 is stored as the number of (n+1)-day-aged products in stock. Since the previous number of four-day-aged products in stock is cleared, 120 is stored as the number of four-day-aged products in stock as of today (step S23). Thereafter, the process advances similarly and is ended after n=0 is detected, to conclude the processing for the day.

The procedure described above results in, as shown in Fig. 2, 210 sheets for five- or more-day-aged products in stock, 120 sheets for four-day-aged products in stock, 130 sheets for three-day-aged products in stock and 140 sheets for two-day-aged products, with the number of one-day-aged products in stock being directly entered as 150.

While the foregoing description assumes that shipment of products is not carried out, the shipment processing may be carried out by subtracting the number of the products for delivery from the number of five- or more-day-aged products in stock. The batch process is carried out similarly in the mornings of the seventh and subsequent days. Thus, the conventional inventory management is performed in a static processing, with every change in the inventory status giving rise to a management operation.

On the other hand, the products shipped from the factory are delivered through many phases such as transportation on a truck, custom control, maritime transportation, port and warehouse, to a retailer and then sold to customers. In this case, inventory management is also carried out in each of these phases by a method similar to the previous example of processing the inventory in the factory.

In the conventional inventory management technique as described above, inventory management operation is carried out every day in a batch process. This means that whether or not a product can be shipped can be determined only after the batch process for the day has been completed. This makes it impossible to quickly determine the shipment in real time, with an additional problem of complicated processing tasks.

### SUMMARY OF THE INVENTION

In view of the problem as described above, an object of the present invention is to provide a method for managing a supply chain of products that makes it possible to determine whether or not products can be shipped from a factory in real time without relying on a daily batch process.

Another object of the present invention is to provide a method for managing a supply chain of products that covers all aspects of business operations in handling commercial goods, such as manufacture, physical distribution and sales operations.

The present invention provides, in a first aspect thereof, a method for managing a supply chain of a plurality of products manufactured in a unit of desired lots, comprising the steps of: assigning an ID to each lot of products of which production is planned; establishing correspondence between any order and a lot of products in stock or planned based on the ID; and performing a supply management for the order based on the ID.

The present invention also provides, in a second aspect thereof, a method for managing a supply chain of a plurality of products manufactured in a unit of desired lots, comprising the steps of: assigning an ID to each lot of products of which production is planned; and performing subsequent management of products in different operational stages thereof based on the ID.

In accordance with the supply chain of the present invention, it is possible to easily grasp the current inventory or the status (or phase) of products regardless of changes in the inventory and transition of the product status in the shipment route, and carry out the supply chain management as desired without need for the daily batch processes.

In the management of the present invention, products to be produced to order and products produced to stock can be managed together by a single product management system.

In the management of the present invention, an item of products to be produced to order, another item of products produced to stock or a new item of products can be managed by using a single product management system.

In addition, it is possible to correspond any number "m" of received orders to any number "n" of lots. It is also possible to control the lot size and number of lots based on the size and the number that are optimum for the current phase, while the association therebetween being controlled by a multi-phase chain of n:m. The association between different phases can be managed by separating the two-dimensional management scheme into a multi-phase stream management (vertical management) wherein management is carried out in multiple stages with many-to-many correspondence and a horizontal management wherein the relationships between lots are controlled with many-to-many correspondence.

More specifically, in the method of the present invention, management of the lot life cycle (vertical management) can be conducted in the form of progress management and management of relation of a lot with other lots or objects (horizontal management) can be conducted in the form of association, independently of each other while maintaining consistency. In the prior art, both the vertical and horizontal managements have been dependent on each other due to the static management concept, thereby giving rise to processing tasks in every phase.

### BRIEF DESCRIPTION OF THE DRAWINGS

Fig. 1 is a flowchart showing a procedure of inventory management in the prior art.

Fig. 2 is a table showing the results obtained from the process of Fig. 1.

Fig. 3 is a schematic diagram showing a lot ID data format in a supply chain management according to an embodiment of the present invention.

Fig. 4 is a flowchart showing a procedure of the supply chain management according to the embodiment.

Fig. 5 is a flowchart showing a procedure of order management according to the embodiment.

### DETAILED DESCRIPTION OF THE PREFERRED EMBODIMENTS

The present invention will be now described below in more detail by way of an embodiment thereof with reference to the accompanying drawings. Referring to Fig. 3 showing a lot ID format used in a supply chain management according to an embodiment of the present invention, every lot of products is identified by a lot ID number for the purpose of stream management. That is, there is one-to-one correspondence between every lot and an ID number. This correspondence is consistently maintained from the stage of planning of products to the delivery of the products, or to the after-sales service thereof. Each lot has, in addition to the ID number, management information including item name for the products, number of the products, date of completion and available date for shipment. If there is a possibility that the lot is to be divided into a plurality of sub-lots, the table may include additional columns for entering information such as the number of products included in the sub-lot and ID number thereof. Also such information may be added thereto as the status of the lot and the order number for which reserve was made.

In the stream management of the present embodiment, reserve for an order or shipment is conducted by specifying the lot ID. As a result, only information required at the time of order reception or for delivery management is the available date for shipment, without need for the current status of the lot. Thus, according to the stream management of the present embodiment, simply setting the available date for shipment is sufficient and makes it unnecessary to shift the lot every day as in the batch process of the prior art. In addition, once the planned date of arrival at a retail store is set upon shipment from the factory, subsequent control operation such as conducted in a batch process is unnecessary.

In the stream management, each lot is called a stream element or an object. A stream element is assigned with an ID number. When an event occurs such as commencement of production, completion of production or shipment for a stream element having a particular ID number, a progress processing or an operation that corresponds to the event is carried out at that time. At the end of each operation, therefore, corresponding situation or status can be obtained. Thus, the status of the lot can be determined by checking whether or not the lot passed a particular operational stage. By entering the information for indicating that a particular lot passed a specified operational stage together with the ID number of the lot in the management system, status of the lot is obtained.

When a fabrication process is delayed behind a scheduled time, lot information such as a scheduled date of completion and an available date for shipment is corrected accordingly at that time. Due to the configuration of the present invention, the supply chain management requires only the vertical management without the need for the horizontal management using a batch process for processing the specified lot in conjunction with other lots.

In the stream management, the concept of "lot" can be introduced at the stage of planning and generally will not be changed until the products are delivered to customers. That is, the ID number, once assigned to a lot which is not yet materialized as products, remains unchanged at the subsequent operational stages, whereby the products can be controlled in terms of the lot ID. Also there is such an advantage that inventory can be reserved for any number "n" of lots upon receipt of any number "m" of orders (order numbers). This means that the supply chain management can be implemented by tracing individual lots among the "n" lots for "m" orders, "m" being independent of "n", on the management system.

In the prior art, the lot ID was assigned only when the products were completed, and therefore it was impossible to perform such a management control as described above. For such products that are generally planed for production upon receiving an order, although serial manufacturing number for the products corresponding to the serial order number has been used in the prior art, the order number and the manufacturing number are related by one-to-one correspondence to each other without consideration to the correspondence between a plurality of lots and a plurality of order numbers. Moreover, an item of products produced to order and another item of products produced to stock have been controlled separately from each other in the prior art. In the management system of the present invention, both the items can be managed together with a new item of products.

Since the method of the present invention makes it possible to reserve the inventory in terms of the lot ID upon an order reception regardless of whether the products are in stock or yet to be manufactured, and regardless of whether the item of products are to be produced to order or produced to stock, it suffices to manage only the lot of interest even when the number of products in stock changes due to the status of other lots. That is, it is sufficient only to carry out a vertical management for making sure that the lot is being processed as scheduled.

Referring to Fig. 4 showing the procedure of a supply chain management according to the embodiment of the present invention, products produced to an order and products produced to a stock can be controlled in a unified way, and particularly correspondence can be established between any number "n" of lots and any number "m" of orders.

When a production plan is determined for production to stock and the item and number of the products are determined (step S1), information including production ID number, item and number of products is assigned to the production plan (step S2). Then, the planned products are divided into a plurality of lots each consisting of a specified number of products, which is determined based on an economical lot size. Each lot is assigned with information such as lot ID number, item and number of products based on the table shown in Fig. 1 (step S3), thereby forming the lot ID data (D1). One or any number of lots can be selected depending on whether the item of products is produced to order or produced to stock.

Then, a scheduler is started for production (step S4). The scheduler prepares a manufacturing procedure for each lot based on the capacity of the production facility such as machinery (step S5).

Based on the manufacturing procedure, a materials-and-parts requirement plan (MRP) is established (step S6), whereupon materials and parts are procured. After procurement of the materials and parts, each lot is produced based on the production plan (step S7), with the resultant products being shipped or stored as factory stock, and the data including production record and stock (D2) are created.

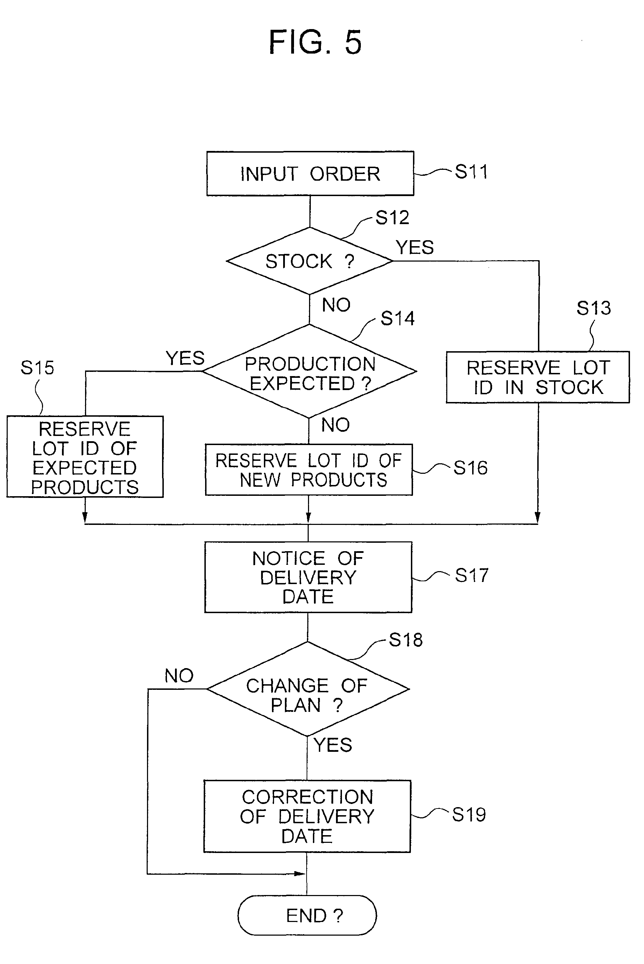

Referring to Fig. 5 showing the order reception processing for an order of the products managed by the procedure shown in Fig. 2, when the order is placed for a particular item of products regardless of whether or not there is a production plan or whether or not production has been conducted, the order is entered (step S11). In this operation, the order is entered regardless of whether it is a repeated order or a new order, and regardless of whether the item of the products is produced to order or produced to stock. When the order is entered, the number of products in factory stock and the number of the products ordered are first compared (step S12) and, in case that the order can be covered by the factory stock, reserve is made on the lot ID of the stock (step S13). If the order cannot be covered by the factory stock or there is no available factory stock due to new products, products to be produced to order or other reason (step S12), it is determined whether or not a lot ID of products planned to be produced at that time can be reserved (step S14). When such a lot ID that can be reserved is found, the lot ID thus found is reserved (step S15). When a lot ID that can be reserved is not found, an instruction for production is issued and a new lot ID is created therefor (step S16). Thus, production for the new lot ID is planned, and is carried out as described with reference to Fig. 2.

In the above procedure, a lot ID is reserved upon an order reception regardless of whether the products are of a lot in stock, a lot planned to be produced, or a lot yet to be produced, and a notice of delivery date is given in response to the entry of the order in accordance with the schedule of production or production record (step S17). In case that there is any change in the schedule of production (step S18), the notice of delivery date is corrected and the correction is output for the serial order number (step S19). Thus, an order is entered at the time the order is received, without being influenced by the reception of other orders. In addition, any lot can be separately managed independently from other lots, and therefore daily control operations are not required unlike in the prior art.

In the example of plywood described in connection with the prior art, products to be produced in a day as a whole preferably constitute a lot, and each lot is assigned with an available shipment date until it is shipped according to the production plan. Accordingly, when an order is received, it is determined at that time to see a lot of products having what number of aged days can be reserved for the order. Thus, it suffices only to correct the available date for shipment at a time when it is found that processing of the reserved lot is behind the schedule.

According to the supply chain management of the present invention, as described above, since the orders and the supply chain are managed based on a lot ID assigned to a lot regardless of whether or not the lot is produced, it is possible to manage all the items of products in a unified way using a computer system.

While the present invention has been described above in detail in conjunction with the preferred embodiment thereof, the present invention is not limited to the configuration of the embodiment described above and it will be understood by those in the art that various alterations and modifications from the configuration of the embodiment fall in the scope of the present invention.

## Claims

1. A method for managing a supply chain of a plurality of products manufactured in a unit of desired lots, comprising the steps of:
assigning an ID to each lot of products of which production is planned;
establishing a correspondence between any order and a lot of products in stock or planned based on said ID; and
performing a supply management for the any order based on said ID.

2. A method for managing a supply chain according to claim 1, wherein products to be produced to order and products produced to stock are managed by a single product management system.

3. A method for managing a supply chain according to claim 1 or 2, wherein an item of products to be produced to order, another item of products produced to stock and a new item of products are managed by a single product management system.

4. A method for managing a supply chain according to one of claims 1 to 3, wherein any number "m" of orders are managed in correspondence to any number "n" of lots.

5. A method for managing a supply chain of a plurality of products manufactured in a unit of desired lots, comprising the steps of:
assigning an ID to each lot of products of which production is planned; and
performing subsequent management of products in different operational stages thereof based on said ID.

## Amended claims

### Amended claims in accordance with Rule 86(2) EPC.

**1.** A method for managing a supply chain of a plurality of products manufactured in a unit of desired lots, comprising the steps of:
assigning an ID to each lot of products of which production is planned;
establishing a correspondence between any order and a lot of products in stock or planned based on said ID; and
performing a supply management for the any order based on said ID.

**2.** The method for managing a supply chain according to claim 1, wherein products to be produced to order and products produced to stock are managed by a single product management system.

**3.** The method for managing a supply chain according to claim 1, wherein an item of products to be produced to order, another item of products produced to stock and a new item of products are managed by a single product management system.

**4.** The method for managing a supply chain according to claim 1, wherein any number "m" of orders are managed in correspondence to any number "n" of lots.

**5.** The method for managing a supply chain according to claim 1, further comprising the steps of tracing a status of the products in said lot of products based on said ID from a planning stage to a delivery stage.

**6.** The method for managing a supply chain according to claim 5, wherein products to be produced to order and products produced to stock are managed by a single product management system.

**7.** The method for managing a supply chain according to claim 5, wherein an item of products to be produced to order, another item of products produced to stock and a new item of products are managed by a single product management system.

**8.** The method for managing a supply chain according to claim 5, wherein any number "m" of orders are managed in correspondence to any number "n" of lots.

**9.** The method for managing a supply chain according to claim 5, said tracing is conducted by checking whether or not said lot passed a particular stage.

**10.** A method for managing a supply chain of a plurality of products manufactured in a unit of desired lots, comprising the steps of:
assigning an ID to each lot of products of which production is planned; and
performing subsequent management of products in different operational stages thereof based on said ID.
